# EUROPÄISCHE PATENTSCHRIFT

(11) **EP 3 719 092 B1**
(45) Veröffentlichungstag und Bekanntmachung des Hinweises auf die Patenterteilung: **08.09.2021**
(21) Anmeldenummer: 20167465.2
(22) Anmeldetag: 01.04.2020
(51) Int. Cl.: C09J 7/29, C09J 7/28

(54) **KLEBEBAND UND FLACHBAHNMATERIAL MIT EINEM DERARTIGEN KLEBEBAND**
ADHESIVE TAPE AND FLAT WEB MATERIAL WITH SUCH AN ADHESIVE TAPE
BANDE ADHÉSIVE ET MATÉRIAU EN BANDE CONTINU PLATE DOTÉ D'UNE TELLE BANDE ADHÉSIVE

(30) Priorität: 05.04.2019 DE 102019204925
(43) Veröffentlichungstag der Anmeldung: 07.10.2020
(73) Patentinhaber: tesa SE, 22848 Norderstedt (DE)
(72) Erfinder: GÖTZ, Kerstin, 22547 Hamburg (DE); CZERWONATIS, Niels, 22393 Hamburg (DE); DOSTAL, Jürgen, 2094 Nagykovacsi (HU)
(74) Vertreter: tesa SE

(56) Entgegenhaltungen:
- EP-A1- 2 433 994
- EP-A1- 3 124 565

## Beschreibung

Die Erfindung betrifft ein Klebeband für den fliegenden Rollenwechsel von auf Rollen aufgewickeltem Flachbahnmaterial mit einer Trägerschicht, welche eine erste Oberfläche und eine der ersten Oberfläche gegenüberliegende zweite Oberfläche aufweist, einer ersten Klebmassenschicht, welche oberhalb der ersten Oberfläche der Trägerschicht mittelbar oder unmittelbar zumindest teilflächig angeordnet ist, einer zweiten Klebmassenschicht, welche auf zumindest einem Teilbereich der zweiten Oberfläche unterhalb der Trägerschicht angeordnet ist, und einer Sollbruchfläche zum flächigen Spalten des Klebebands, wobei die Sollbruchfläche als Teil eines Spaltsystems ausgebildet ist. Dabei besteht das Spaltsystem zum Beispiel aus einer sich unter Zug senkrecht zur Fläche des Klebebands teilenden Schicht, deren Adhäsionskräfte zur Trägerschicht und zur zweiten Klebmassenschicht größer sind als die Kohäsionskräfte innerhalb der Schicht, oder aus zwei Schichten, zwischen welchen sich eine dritte unter Zug senkrecht zur Fläche des Klebebands abspaltende Schicht befindet. Das Spaltsystem kann auch aus einer mit einer Oberflächenbeschichtung versehenen Schicht bestehen, wobei die Adhäsionskräfte der zweiten Klebmassenschicht zu dieser Schicht und die Adhäsionskräfte dieser Schicht zur Oberflächenbeschichtung größer sind als die Adhäsionskräfte der Oberflächenbeschichtung zur Trägerschicht und/oder größer als die Kohäsionskräfte innerhalb der Oberflächenbeschichtung. Weiter betrifft die Erfindung ein Flachbahnmaterial, welches auf einer Rolle aufgewickelt ist und ein derartiges Klebeband aufweist. Ferner betrifft die Erfindung eine Verwendung eines derartigen Klebebands.

### Stand der Technik

Spliceklebebänder für den fliegenden Rollenwechsel sind zum Beispiel aus EP 1 022 245 B1, EP 1 104 795 B1, DE 10 2008 059 381 A1 und DE 10 2015 214 193 A1 bekannt. Der fliegende Rollenwechsel ist in Papierfabriken, im Papier- und im Foliendruck ein gängiges Verfahren, um eine alte, fast abgespulte Rolle eines Flachbahnmaterials durch eine neue zu ersetzen, ohne die schnell laufenden Maschinen anhalten zu müssen. Das Spliceklebeband wird dabei auf den Anfangsbereich eines auf eine Rolle aufgewickelten Flachbahnmaterials aufgebracht, wobei es mit seiner ersten und mit seiner zweiten Klebmassenschicht mit dem Flachbahnmaterial verklebt wird. Das Abwickeln des Flachbahnmaterials einer neuen Rolle, welche eine alte Rolle, auf welcher das Flachbahnmaterial fast vollständig abgewickelt ist, ersetzen soll, heißt "fliegender Rollenwechsel", wenn es bei laufender Flachbahn erfolgt. Dabei wird das mit dem Flachbahnmaterial der neuen Rolle verbundene Klebeband im Bereich des Spaltsystems so gespalten, dass die erste Klebmassenschicht und die Trägerschicht an einem ersten Bereich des Flachbahnmaterials und die zweite Klebmassenschicht und der mit der zweiten Klebmassenschicht verbundene Teil des Spaltsystems an einem von dem ersten Bereich um eine Rollenwicklung beabstandet angeordneten zweiten Bereich des Flachbahnmaterials auf der Außenseite der Rollenwicklung verbleiben. Der erste Bereich des Flachbahnmaterials der neuen Rolle deckt die erste Klebmassenschicht nur teilweise ab, und der nicht von dem Flachbahnmaterial der neuen Rolle abgedeckte Bereich der ersten Klebmassenschicht stellt die Verbindung zum Flachbahnmaterial der alten Rolle her. Die zweite Klebmassenschicht sollte nach dem Spalten komplett abgedeckt sein, um das Risiko eines Bahnabrisses durch eine freiliegende Klebmasse zu vermeiden. Der spezielle Aufbau des Klebebands mit den zwei sich gegenüberliegenden Klebmassenschichten stellt sicher, dass es vor einem Rollenwechsel nicht zu einem Abwickeln des Flachbahnmaterials der neuen Rolle kommt und dass die Sollbruchfläche des Klebebands beim Rollenwechsel kontrolliert und definiert öffnet, um das störungsfreie Abwickeln des Flachbahnmaterials der neuen Rolle sicherzustellen.

Beim Spaltvorgang kann es auftreten, dass der abzuspaltende Teil, insbesondere die zweite Klebmassenschicht mit einem daran haftenden Teil des Spaltsystems, stellenweise nicht auf der neuen Bahn verklebt und auch auf der neuen Bahn von vorneherein nicht vollflächig verklebt war. Der abzuspaltende Teil des Spaltsystems mit der zweiten Klebmassenschicht kann dadurch in den Bereichen fehlender Verklebung ausreißen und auch zerreißen, wobei sich der abzuspaltende Teil nicht von der Trägerschicht löst und das Spaltsystem sich nicht über die gesamte Klebebandlänge öffnet, sondern in den Bereichen fehlender Verklebung geschlossen bleibt. An der Trägerschicht verbleiben nicht gespaltene, noch klebende Bereiche des Spaltsystems mit der zweiten Klebmasseschicht, welche sich später als Fetzen lösen und die Vorrichtung verschmutzen können, was zu einem erhöhten Reinigungsaufwand der Maschine führt.

### Darstellung der Erfindung

Es ist eine Aufgabe der vorliegenden Erfindung, ein Klebeband und ein Flachbahnmaterial mit einem derartigen Klebeband zur Verfügung zu stellen, die ein Verschmutzen der Maschine beim Rollenwechsel verhindern.

Die Aufgabe wird mit den Merkmalen der unabhängigen Ansprüche gelöst. Vorteilhafte Ausgestaltungen und Weiterbildungen der Erfindung sind Gegenstand der abhängigen Ansprüche.

Das Klebeband gemäß der Erfindung zeichnet sich dadurch aus, dass zwischen der zweiten Klebmassenschicht und dem Spaltsystem eine Verstärkungsschicht aufgebracht ist, die die Reißkraft des nach dem Spalten auf der zweiten Klebmassenschicht verbleibenden Teils des Spaltsystems längs zur Laufrichtung des Klebebands erhöht.

Der nach dem Spalten auf der zweiten Klebmassenschicht verbleibende Teil des Spaltsystems weist üblicherweise eine sehr geringe Reißkraft auf. Unter der Reißkraft eines Materials versteht man die Zugkraft des Materials im Augenblick des Reißens, bezogen auf die Bandbreite des Materials im Ausgangszustand. Die erfindungsgemäß durch die Verstärkungsschicht erhöhte Reißkraft kann ein Ausreißen und auch Zerreißen des auf der zweiten Klebmassenschicht verbleibenden abgespaltenen Teils des Spaltsystems auch bei einer nicht vollflächigen Verklebung auf der neuen Bahn verhindern. Insbesondere das Ausreißen und Zerreißen führen zu unerwünschten Verschmutzungen, zum Beispiel in Form von Schnipseln. Mit der Verstärkungsschicht kann es gelingen, dass die in Längsrichtung des Klebebandes wirkenden Zugkräfte auch in den nach dem Spalten auf der zweiten Klebmassenschicht verbleibenden Teilen des Spaltsystems, die nicht auf der neuen Rolle verklebt sind, aufgenommen werden. Durch die erfindungsgemäß erhöhte Reißkraft wird somit auch ein nicht verklebter Abschnitt beim Spaltvorgang durch die umliegenden Bereiche zuverlässig mit geöffnet, ohne dass es zu einem Ausreißen oder Zerreißen kommt.

Die Reißkraft wird in Newton pro Bandbreite - üblicherweise 15 mm - angegeben. Der Zugversuch zur Ermittlung der Reißkraft orientiert sich an der DIN EN ISO 6892-1 für metallische Werkstoffe, und die Messung selbst erfolgt in Anlehnung an die Bestimmung der Zugeigenschaften von Kunststoffen nach der DIN EN ISO 527-1/- 2/-3, die Bestimmung von Eigenschaften bei Zugbeanspruchung von Papier und Pappe nach der DIN EN ISO 1924-2 bzw. die Bestimmung von Zugeigenschaften von textilen Flächengebilden nach der DIN EN ISO 13934-1. Von der Beschaffenheit des Spaltsystems hängt ab, welche Norm für die Messung herangezogen wird.

Die Verstärkungsschicht ist auf der in Richtung des Spaltsystems zeigenden Oberfläche der zweiten Klebmassenschicht aufgebracht, bevorzugt in direktem Kontakt mit der zweiten Klebmassenschicht, so dass sie den nach dem Spalten auf der zweiten Klebmassenschicht verbleibenden Teil des Spaltsystems besonders gut stabilisiert. Zudem wird die zweite Klebemasse durch den direkten Kontakt besser auf dem Spaltsystem verankert, was die Auswahl an geeigneten Spaltsystemen vergrößert.

Die Verstärkungsschicht kann beispielsweise durch Beschichtung aufgebracht sein, was einen besonders gleichmäßigen Auftrag gewährleistet, insbesondere mit konstanter Dicke über die Fläche der zweiten Klebmassenschicht betrachtet. Je nach Material der Verstärkungsschicht kann unterschiedlich beschichtet werden, zum Beispiel, indem das Material in einem Extruder aufgeschmolzen oder als Lösung auf das Spaltsystem aufgebracht wird, um anschließend auszuhärten. Darüber hinaus ist Beschichtung durch Sprühen, Spritzen, Spritzgießen, Vorhangguss, sog. "Curtain Coating", Streichen, sowie mittels Düsen, Bürsten, Rakel oder Walzen möglich. Alternativ lässt sich die Verstärkungsschicht auflaminieren, etwa durch Heißlaminieren oder Kaltlaminieren, beispielsweise mittels Presse. Umfasst die so gebildete Verstärkungsschicht mehrere Lagen, können die auch durch einen Haftvermittler zusammengehalten werden.

Als Material für die Verstärkungsschicht kommt ein polymeres Material wie Polyethylen, Polypropylen, Polyamid, Polystyrol, PET, PVC in Betracht, das bevorzugt in oben genannten Beschichtungsverfahren aufgebracht wird. Die Verstärkungsschicht kann auch aus Metall bestehen oder Metall enthalten. Dann lässt sich der nach dem Spalten auf der zweiten Klebmassenschicht verbleibende Teil des Spaltsystems beispielsweise mittels Sensoren detektieren. Die Verstärkungsschicht ist dann vorteilhaft als Folie auflaminiert. Bevorzugtes Metall ist Aluminium, denn es ist gut induktiv detektierbar und auf dem Markt als Folie leicht erhältlich. Auch andere Metalle neben Aluminium, die sich gut für eine Verstärkungsschicht eignen, sind denkbar. Als weiteres Material für die Verstärkungsschicht eignet sich Papier. Die Auswahl des Papiers orientiert sich an den Vorgaben für eine höhere Reißfestigkeit, die Gesamtdicke des Klebebandes und eine geringe Biegesteifigkeit. Ein Vorteil von Papier besteht darin, dass es besonders gut handeinreißbar und zudem repulpierbar ist.

In einer bevorzugten Ausführung weist die Verstärkungsschicht des Klebebands eine geringe Biegesteifigkeit in Längs- und Querrichtung auf. Eine geringe Biegesteifigkeit in Längsrichtung des Klebebands gewährleistet eine einfache Handhabung des Klebebands, und eine geringe Biegesteifigkeit in Längs- und Querrichtung sorgt für einen guten Durchlauf der gespleißten Bahn durch die Maschine.

Für eine leichte Applikation des Klebebands ist die Verstärkungsschicht quer zur Längsrichtung des Klebebands vorzugsweise per Hand einreißbar ausgebildet.

Die Verstärkungsschicht ist vorteilhaft so ausgebildet, dass die Reißkraft des auf der zweiten Klebmassenschicht verbleibenden Teils des Spaltsystems mindestens 10 N/ 15 mm in Längsrichtung der Klebmassenschicht beträgt, bevorzugt mindestens 20 N/15 mm, besonders bevorzugt mindestens 30 N/15 mm. Bei einer derartig bemessenen Reißkraft lässt sich ein Ausreißen und/oder Zerreißen des nach dem Spalten auf der zweiten Klebmassenschicht verbleibenden Teils des Spaltsystems besonders sicher verhindern.

In einer besonderen Ausführung ist eine weitere Verstärkungsschicht zwischen der Trägerschicht und dem Spaltsystem vorgesehen, die den nicht abspaltenden und auf der Trägerschicht verbleibenden Teil des Spaltsystems verstärkt. Die weitere Verstärkungsschicht gewährleistet eine gleichmäßige Kraftaufnahme in dem nicht abspaltenden und auf der Trägerschicht verbleibenden Teil des Spaltsystems und dadurch ein besonders zuverlässiges Spalten. Die weitere Verstärkungsschicht kann gleich zu der ersten Verstärkungsschicht, welche zwischen der zweiten Klebmassenschicht und dem Spaltsystem aufgebracht ist, ausgebildet sein.

Die Lösung der Aufgabe erfolgt erfindungsgemäß ferner mittels eines Flachbahnmaterials, welches auf eine Rolle aufgewickelt ist, wobei das Flachbahnmaterial ein wie vorstehend beschrieben aus- und weitergebildetes Klebeband aufweist.

Weiter ist erfindungsgemäß die Verwendung eines wie vorstehend beschrieben aus- und weitergebildeten Klebebands für einen fliegenden Rollenwechsel vorgesehen.

### Kurze Beschreibung der Zeichnungen

Weitere, die Erfindung verbessernde Maßnahmen werden nachstehend gemeinsam mit der Beschreibung bevorzugter Ausgestaltungen der Erfindung anhand der Figuren näher dargestellt. Es zeigen:
- Fig. 1: eine schematische Darstellung eines Klebebands mit Spaltsystem in einer ersten Ausführung gemäß der Erfindung,
- Fig. 2: eine weitere schematische Darstellung eines Klebebands mit Spaltsystem in einer zweiten Ausführung gemäß der Erfindung,
- Fig. 3: eine weitere schematische Darstellung eines Klebebands mit Spaltsystem in einer dritten Ausführung gemäß der Erfindung, und
- Fig. 4a bis 4e: schematische Darstellungen eines Flachbahnmaterials gemäß der Erfindung während eines fliegenden Rollenwechsels.

### Bevorzugte Ausführungsformen der Erfindung

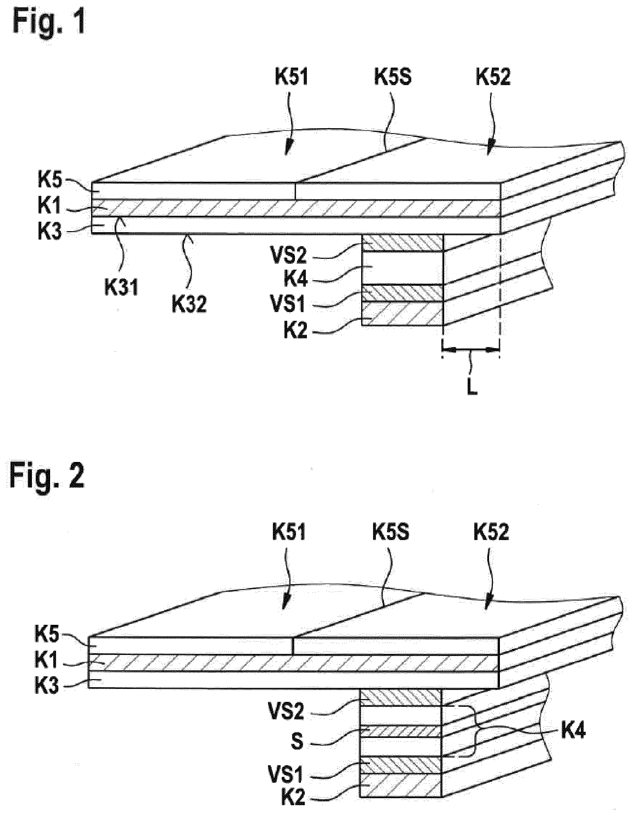

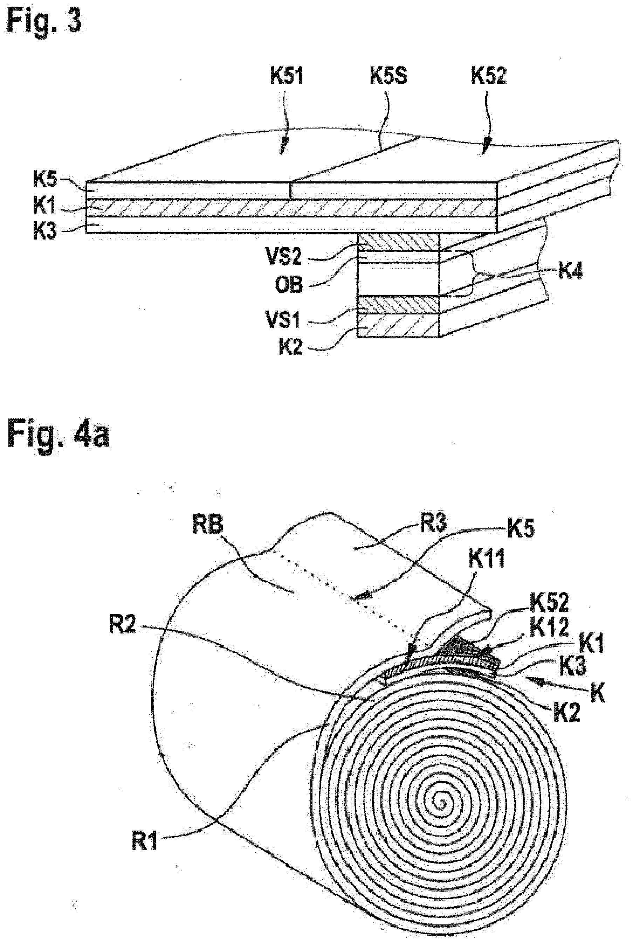

Fig. 1 bis 3 zeigen jeweils schematisch ein Klebeband K, welches auf einem wie in Fig. 4a bis 4e gezeigten Flachbahnmaterial RB, das auf einer Rolle R, B aufgewickelt ist, angeordnet werden kann, und zwar mit drei verschiedenen Ausführungsformen des Spaltsystems K4. Stets ist auf der ersten Oberfläche K31 der Trägerschicht K3 die erste Klebmassenschicht K1 aufgetragen, welche von der Trennabdeckung K5 abgedeckt wird. Auf der gegenüberliegenden zweiten Oberfläche K32 der Trägerschicht K3 ist auf einem Flächenabschnitt eine weitere Verstärkungsschicht VS2 aufgebracht, woran sich mehrere übereinanderliegende Schichten anschließen. Die weitere Verstärkungsschicht VS2 wird mittels einer geeigneten Klebmasse mit der zweiten Oberfläche K32 verbunden. Falls eine weitere Verstärkungsschicht VS2 nicht vorgesehen ist, wird das Spaltsystem K4 mittels einer geeigneten Klebmasse mit der zweiten Oberfläche K32 verbunden. Nach der weiteren Verstärkungsschicht VS2 schließen sich an den Flächenabschnitt der zweiten Oberfläche K32 das Spaltsystem K4, die Verstärkungsschicht VS1 und die zweite Klebmassenschicht K2 an. Das Spaltsystem K4 teilt die zweite Klebmassenschicht K2 von der Trägerschicht K3 ab. Die Verstärkungsschicht VS1 verstärkt dabei den nach dem Spalten auf der zweiten Klebmassenschicht K2 verbleibenden Teil K4b des Spaltsystems K4, während die weitere Verstärkungsschicht VS2 den Flächenabschnitt der Trägerschicht K3 verstärkt.

In Fig. 1 ist das Spaltsystem K4 derart ausgeformt, dass die inneren Kohäsionskräfte geringer sind als die Adhäsionskräfte zwischen dem Spaltsystem K4 und den angrenzenden Schichten, sodass sich das Spaltsystem K4 bei Zug senkrecht zur Fläche des Klebebands K teilt. Ein Teil K4a des Spaltsystems K4 bleibt auf der Oberfläche K32 der Trägerschicht K3 zurück, während ein anderer Teil K4b des Spaltsystems K4 auf der zweiten Klebmassenschicht K2 verbleibt und den entsprechenden Teil der zweiten Klebmassenschicht K2 abdeckt. Die Sollbruchstelle des Spaltsystems K4 besteht beispielsweise aus einem Papier.

In Fig. 2 besteht das Spaltsystem K4 aus zwei Schichten mit einer inneren Spaltschicht S, an welcher die Spaltung vollzogen wird. Die innere Spaltschicht S kann aus einem abspaltenden Lack bestehen, während das Material der beiden umliegenden Schichten insofern frei gewählt werden kann, als dass dessen Adhäsionskräfte an die umliegenden Verstärkungsschichten VS1 und VS2 und dessen innere Kohäsionskräfte größer sind als diejenigen der inneren Spaltschicht S.

In Fig. 3 umfasst das Spaltsystem K4 eine mit einer Oberflächenbeschichtung OB versehene Schicht, wobei die Oberflächenbeschichtung OB die Adhäsionskräfte zur darüber liegenden Verstärkungsschicht VS2 herabsetzt und das Spaltsystem K4 dadurch zwischen Oberflächenbeschichtung OB und Verstärkungsschicht VS2 gespalten wird.

In Fig. 1 bis 3 ist auf der ersten Oberfläche K31 der Trägerschicht K3 unmittelbar eine erste Klebmassenschicht K1 angeordnet. Sie könnte auch mittelbar angeordnet sein, wenn zwischen der Trägerschicht K3 und der ersten Klebmassenschicht K1 eine oder mehrere Schichten vorgesehen sind, zum Beispiel Funktionsschichten, etwa für ein Detektieren des Klebebandes K, Lackschichten, Metallschichten, insbesondere mit Aluminium, oder Schichten mit anderen funktionellen Additiven wie Farbstoffen, Metallpulver, Gettermaterialien, weitere Klebmassenschichten, Folienschichten sowie Schichten aus textilen Materialien. Die erste Klebmassenschicht K1 ist vollflächig auf der ersten Oberfläche K31 der Trägerschicht K3 angeordnet, teilflächig wäre auch denkbar.

Auf der ersten Klebmassenschicht K1 ist eine Trennabdeckung K5 - zum Beispiel ein silikonisiertes Papier oder eine silikonisierte Folie - mit einem Schlitz K5S in Längsrichtung des Klebebands K angebracht, der die Trennabdeckung K5 in zwei Abschnitte K51, K52 trennt. Eine Perforation könnte denselben Zweck erfüllen.

Auf der zweiten Oberfläche K32 der Trägerschicht K3 ist eine zweite Klebmassenschicht K2 mittelbar angeordnet, denn dazwischen befindet sich ein Spaltsystem K4. Das Spaltsystem K4 und die zweite Klebmassenschicht K2 sind auf einem Teilbereich der zweiten Oberfläche K32 der Trägerschicht K3 angeordnet. Das Spaltsystem K4 umfasst eine Sollbruchfläche zum flächigen Spalten des Klebebands K, wobei die Sollbruchfläche dem Teilbereich entspricht, auf welchem das Spaltsystem K4 zusammen mit der zweiten Klebmassenschicht K2 angeordnet ist.

Das Klebeband K spaltet im Spaltsystem K4 oder zwischen dem Spaltsystem K4 und der Trägerschicht K3, nicht aber innerhalb der Trägerschicht K3, so dass man bei der Wahl des Materials der Trägerschicht K3 insoweit nicht eingeschränkt ist. Voraussetzung ist lediglich, dass sich auf der Trägerschicht K3 ein Spaltsystem K4 vorsehen lässt, das entweder hinreichend geringe Adhäsionskräfte zur Verstärkungsschicht VS2 aufweist, beispielsweise mittels einer Oberflächenbeschichtung, oder das hinreichend geringe innere Kohäsionskräfte aufweist oder das eine zusätzliche abspaltende Schicht im Innern besitzt, so dass in jedem Fall die Haftung der zweiten Klebmassenschicht K2 auf dem Spaltsystem K4 höher ist als eine der vorgenannten Kräfte.

Als Trägerschicht K3 können grundsätzlich Papiere, Folien, zum Beispiel aus Kunststoff, zum Beispiel mit Metall, Laminate aus den vorgenannten Komponenten und Vliese eingesetzt werden.

Die erste Klebmassenschicht K1 und/oder die zweite Klebmassenschicht K2 können Selbstklebmassen sein. Als Selbstklebmassen - auch als Haftklebmassen, englisch: PSA = "pressure sensitive adhesives" bezeichnet - werden insbesondere solche polymeren Klebmassen angesehen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen, hier insbesondere an den Flachbahnmaterialien, bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebendes Substrat hinreichend zu benetzen, damit sich zwischen der Klebmasse und dem Substrat für die Haftung hinreichende Wechselwirkungen ausbilden können. Die für die erste Klebmassenschicht K1 verwendete Klebmasse wird bevorzugt mit einem hohen Tack (Anfassklebrigkeit) gewählt, während für zweite Klebmassenschicht K2 vorteilhaft eine scherfeste (Selbst-)Klebmasse eingesetzt wird. Als Selbstklebmassen können Systeme auf Acrylatbasis eingesetzt werden. Als Klebmassen lassen sich Systeme auf Basis von Copolymeren oder auf Basis von Abmischungen verwenden. Sowohl wasserlösliche als auch wasserunlösliche Acrylate sind einsetzbar, insbesondere vorteilhaft auch in Wasser polymerisierte Acrylate (Waterborne-Systeme). Weiterhin lassen sich auch Natur- und Synthesekautschukmassen, Klebemassen auf Silikonbasis als auch Dispersionen der vorstehend beschriebenen Verbindungen verwenden. Gut geeignet sind auch Mischungen, ggf. mehrphasig, verschiedener Typen von Haftklebemassen, etwa Mischungen von kautschukbasierten Klebemassen (Naturkautschuk und/oder Synthesekautschuk) mit Acrylatklebemassen oder Mischungen aus Naturkautschuk mit Synthesekautschuk. Auch Mischungen aus verschiedenen Komponenten, gewählt aus der Gruppe der Silikonklebmassen der Kautschuksysteme (Naturkautschuk und/oder Synthesekautschuk) und/oder der Acrylatsysteme sind einsetzbar. Prinzipiell kommen alle Basistypen von Haftklebmassen in Frage, welche für derartige Verklebungen geeignet sind. Vorteilhaft sind repulpierbare Klebemassen, die bei der Wiederaufbereitung des Flachbahnmaterials, insbesondere von Papier, weitgehend oder vollständig in die Pulpe eingebracht werden können, also in den in Wasser gelösten beziehungsweise aufgeschwemmten Papier- oder Faserbrei.

Die zweite Klebmassenschicht K2 und somit auch das Spaltsystem K4 sind in Form eines Streifens aufgebracht, wobei sich die zweite Klebmassenschicht K2 parallel mit einem Abstand L zu einem in Längsrichtung des Klebebands K verlaufenden Kantenbereich der Trägerschicht K3 erstreckt. Der als Einrückung ausgebildete Abstand L kann bis zu 10 mm groß sein, bevorzugt etwa 2 mm. Durch die Wahl der Breite der zweiten Klebmassenschicht K2 und des Spaltsystems K4 lässt sich die Spaltarbeit, die aufgewandt werden muss, um die Sollbruchfläche vollständig zu spalten, unabhängig von der Breite des Hauptträgers K3 einstellen. Dies ist ein Vorteil zu den Systemen, bei denen sich die Sollbruchfläche vollflächig über die Breite des Klebebands K erstreckt.

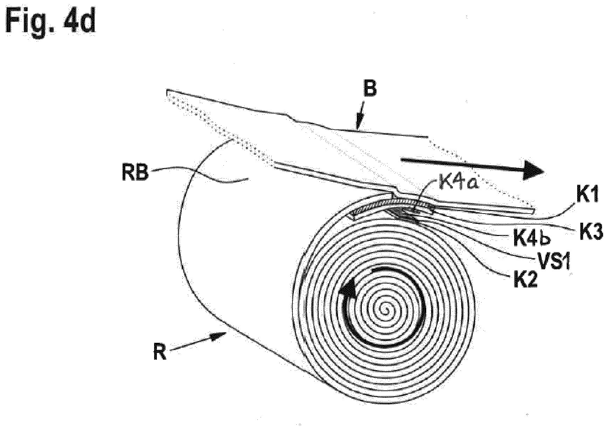

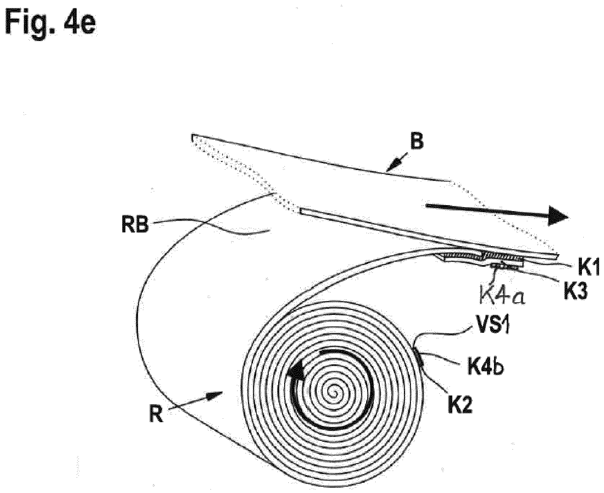

Um die Reißkraft des abspaltenden Abschnitts bzw. Teils K4b, vgl. Fig. 4d und 4e, in Längsrichtung des Klebebands K zu erhöhen, ist zwischen der Klebmassenschicht K2 und dem Spaltsystem K4 eine Verstärkungsschicht VS1 angeordnet. Die Verstärkungsschicht VS1 liegt unmittelbar an der Klebmassenschicht K2 und auch unmittelbar an dem Spaltsystem K4 an. Mittels der Verstärkungsschicht VS1 kann die Stabilität des abspaltenden Teils K4b wesentlich verbessert werden, um ein Zerreißen oder Abreißen des abspaltenden Teils K4b zu verhindern. Die Verstärkungsschicht VS1 erstreckt sich jeweils über die gesamte Länge und Breite der Klebmassenschicht K2 und des Spaltsystems K4, so dass eine Verstärkung über die gesamte Fläche des abspaltenden Teils erreicht werden kann.

Für einen nach dem Spalten auf der Klebmassenschicht K2 verbleibenden Teil K4b des Spaltsystems K4 ohne Verstärkungsschicht VS1 lässt sich eine Reißkraft nicht zuverlässig messen, denn solche Muster, die nach einem durchlaufenen Spaltprozess in der Regel inhomogen beschaffen sind, weisen eine verschwindend geringe Reißkraft auf, schätzungsweise von weniger als 1 N/15 mm. Für den nach dem Spalten auf der Klebmassenschicht K2 verbleibenden Teil K4b eines in sich spaltenden Papiers K4 mit einer Verstärkungsschicht VS1 aus Aluminium liegen Messergebnisse für die Reißkraft in Längsrichtung des Klebebands vor:
1. mit 9 µm Alufolie verstärkt: 23 N/15 mm,
2. mit 12 µm Alufolie verstärkt: 32 N/15 mm.

Dabei wurde die Messung am Teil K4b des Spaltsystems K4 mit Verstärkungsschicht VS1 ohne die Klebmassenschicht K2 durchgeführt. Es ist nicht von Bedeutung, ob die Reißkraft für den auf der Klebmassenschicht K2 verbleibenden Teil K4b des Spaltsystems K4 mit der oder ohne Klebmassenschicht K2 gemessen wird, denn die Klebmassenschicht K2 hat kaum Einfluss auf die Reißkraft.

In den Fig. 4a bis 4e ist beispielhaft ein fliegender Rollenwechsel gezeigt. Dafür wird die neue Rolle R eines Flachbahnmaterials RB vorbereitet, indem der die oberste Wicklung bildende Flachbahnabschnitt R1 der neuen Rolle R auf den die zweite Wicklung bildendenden Flachbahnabschnitt R2 der neuen Rolle R mit einem erfindungsgemäßen Klebeband K verklebt wird. Dann wird die erste Klebmassenschicht K1 des Klebebandes K nur teilweise freigelegt. Dies kann geschehen, indem nur ein Teil der Trennabdeckung K51 abgezogen wird, so dass, wie in Fig. 4a zu erkennen ist, ein klebender Bereich K11 und ein nichtklebender - weil abgedeckter - Bereich K12 der Klebmassenschicht K1 verbleibt. Der Flachbahnabschnitt R1 wird auf den klebenden Bereich K11 verklebt. Dadurch wird R1 mit R2 verbunden.

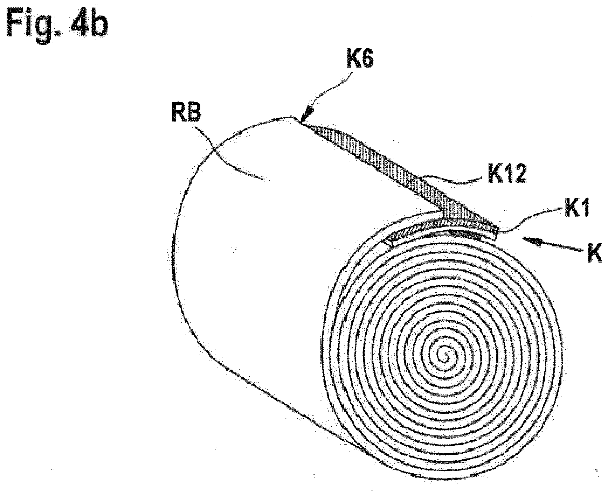

Die überstehende Fahne R3 des auf die erste Klebmassenschicht K1 verklebten Flachbahnabschnitts R1 wird dann im Bereich der gestrichelt dargestellten Linie abgelängt, so dass das dann entstandene Ende des Flachbahnmaterials RB im Wesentlichen an die verbliebene Trennabdeckung K52 der ersten Klebmassenschicht K1 des Klebebands K angrenzt. Dann kann der noch vorhandene Teil K52 der Trennabdeckung K5 abgezogen werden, so dass eine offenliegende Klebmassenoberfläche K12 vorliegt, die zur Verklebung mit der ablaufenden alten Flachbahn B genutzt werden kann, vgl. Fig. 4b.

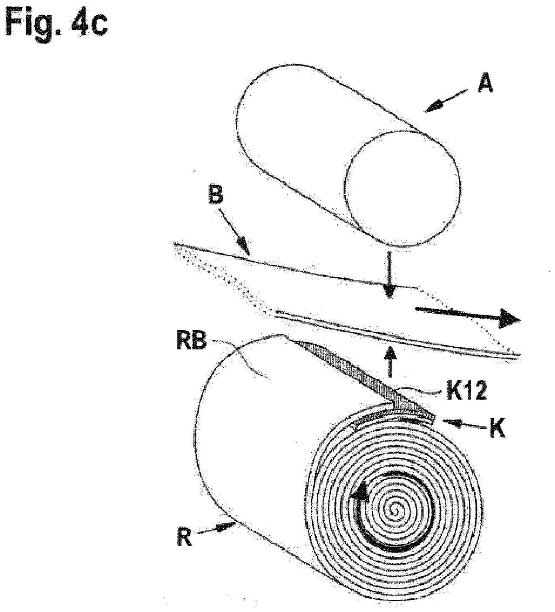

Wie in Fig. 4c zu erkennen ist, wird anschließend die so vorbereitete Rolle R neben eine fast gänzlich abgespulte zu ersetzende alte Rolle B platziert und auf die im Wesentlichen gleiche Umfangsgeschwindigkeit wie diese beschleunigt. Daraufhin wird sie gegen das Flachbahnmaterial der alten Rolle B, beispielsweise unter Zuhilfenahme eines Andruckzylinders A, gedrückt, wobei der offenliegende Flächenbereich K12 der ersten Klebmassenschicht K1 des Klebebandes K mit dem Flachbahnmaterial der alten Rolle B bei im Wesentlichen gleichen Geschwindigkeiten der Rollen R, B verklebt wird.

Zugleich oder unmittelbar nach der Verklebung mit dem Flachbahnmaterial der alten Rolle B öffnet sich das Klebeband K an der Sollbruchfläche, wie in Fig. 4d zu erkennen ist, so dass das Flachbahnmaterial RB der neuen Rolle R mit dem Flachbahnmaterial der alten Rolle B, an die sie angeklebt ist, in den Prozess eingefädelt werden kann, wie in Fig. 4e zu erkennen ist. Hierdurch kann ein kontinuierlicher Prozessablauf bei einem fliegenden Rollenwechsel sichergestellt werden.

Der abgespaltene Rest K4b des Spaltsystems K4 deckt die zweite Klebmassenschicht K2 nach dem Spalten vollständig ab, damit es im weiteren Maschinendurchlauf nicht zu Verklebungen kommt. Der andere Teil K4a des Spaltsystems K4 verbleibt auf der zweiten Oberfläche K32 der Trägerschicht K3.

Die Erfindung beschränkt sich in ihrer Ausführung nicht auf die vorstehend angegebene bevorzugte Ausgestaltung. Vielmehr ist eine Anzahl von Varianten denkbar, welche von den dargestellten Lösungen auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein.

## Patentansprüche

1. Klebeband (K) für den fliegenden Rollenwechsel von auf Rollen (R, B) aufgewickeltem Flachbahnmaterial (RB) mit
einer Trägerschicht (K3), welche eine erste Oberfläche (K31) und eine der ersten Oberfläche (K31) gegenüberliegende zweite Oberfläche (K32) aufweist, einer ersten Klebmassenschicht (K1), welche auf der ersten Oberfläche (K31) der Trägerschicht (K3) mittelbar oder unmittelbar zumindest teilflächig angeordnet ist,
einer zweiten Klebmassenschicht (K2), welche mittelbar auf zumindest einem Flächenbereich der zweiten Oberfläche (K32) der Trägerschicht (K3) angeordnet ist, und
mindestens einer Sollbruchfläche zum flächigen Spalten des Klebebands (K), wobei die Sollbruchfläche als Teil eines Spaltsystems (K4) zwischen der Trägerschicht (K3) und der zweiten Klebmassenschicht (K2) ausgebildet ist, **dadurch gekennzeichnet, dass** zwischen der zweiten Klebmassenschicht (K2) und dem Spaltsystem (K4) eine Verstärkungsschicht (VS1) aufgebracht ist, die die Reißkraft des nach dem Spalten auf der zweiten Klebmassenschicht (K2) verbleibenden Teils (K4b) des Spaltsystems (K4) längs zur Laufrichtung des Klebebands (K) erhöht.

2. Klebeband (K) nach Anspruch 1, **dadurch gekennzeichnet, dass** die Verstärkungsschicht (VS1) in einem Extrusionsverfahren aufgebracht wurde.

3. Klebeband (K) nach Anspruch 1, **dadurch gekennzeichnet, dass** die Verstärkungsschicht (VS1) auflaminiert ist.

4. Klebeband (K) nach einem der Ansprüche 1 bis 3, **dadurch gekennzeichnet, dass** die Verstärkungsschicht (VS1) aus einem polymeren Material ausgebildet ist.

5. Klebeband (K) nach einem der Ansprüche 1 bis 3, **dadurch gekennzeichnet, dass** die Verstärkungsschicht (VS1) aus Papier ausgebildet ist.

6. Klebeband (K) nach einem der Ansprüche 1 bis 5, **dadurch gekennzeichnet, dass** die Verstärkungsschicht (VS1) Metall umfasst.

7. Klebeband (K) nach Anspruch 6, **dadurch gekennzeichnet, dass** das Metall Aluminium ist.

8. Klebeband (K) nach einem der Ansprüche 1 bis 7, **dadurch gekennzeichnet, dass** die Verstärkungsschicht (VS1) eine geringe Biegesteifigkeit aufweist.

9. Klebeband (K) nach einem der Ansprüche 1 bis 8, **dadurch gekennzeichnet, dass** die Verstärkungsschicht (VS1) quer zur Längsrichtung des Klebebands (K) per Hand einreißbar ausgebildet ist.

10. Klebeband (K) nach einem der Ansprüche 1 bis 9, **dadurch gekennzeichnet, dass** die Reißkraft (ermittelt nach der Methode in der Beschreibung) des auf der zweiten Klebmassenschicht (K2) verbleibenden Teils (K4b) des Spaltsystems (K4) mindestens 10 N/ 15 mm in Längsrichtung des Klebebandes (K) beträgt, bevorzugt mindestens 20 N/15 mm, besonders bevorzugt mindestens 30 N/15 mm.

11. Klebeband (K) nach einem der Ansprüche 1 bis 10, **dadurch gekennzeichnet, dass** zwischen der Trägerschicht (K3) und dem Spaltsystem (K4) eine weitere Verstärkungsschicht (VS2) aufgebracht ist.

12. Flachbahnmaterial (RB), welches auf eine Rolle (R, B) aufgewickelt ist, wobei das Flachbahnmaterial (RB) ein Klebeband (K) nach einem der Ansprüche 1 bis 11 aufweist.

13. Verwendung eines nach einem der Ansprüche 1 bis 11 ausgebildeten Klebebands (K) für einen fliegenden Rollenwechsel.

## Claims

1. Adhesive tape (K) for changing flat web material (RB) wound on rolls (R, B) on the fly, having
a carrier layer (K3) which has a first surface (K31) and a second surface (K32) which lies opposite the first surface (K31);
a first adhesive compound layer (K1) which is disposed indirectly or directly, at least on part of the face, on the first surface (K31) of the carrier layer (K3);
a second adhesive compound layer (K2), which is disposed indirectly on at least a face region of the second surface (K32) of the carrier layer (K3); and
at least one predetermined breaking face for splitting in a planar manner the adhesive tape (K);
wherein the predetermined breaking face is configured as part of a splitting system (K4) between the carrier layer (K3) and the second adhesive compound layer (K2),
**characterized in that** a reinforcement layer (VS1) which increases the tear-off force of that part (K4b) of the splitting system (K4) that after the splitting remains on the second adhesive compound layer (K2) longitudinally to the running direction of the adhesive tape (K) is applied between the second adhesive compound layer (K2) and the splitting system (K4).

2. Adhesive tape (K) according to Claim 1, **characterized in that** the reinforcement layer (VS1) has been applied by an extrusion method.

3. Adhesive tape (K) according to Claim 1, **characterized in that** the reinforcement layer (VS1) is laminated thereon.

4. Adhesive tape (K) according to one of Claims 1 to 3, **characterized in that** the reinforcement layer (VS1) is configured from a polymer material.

5. Adhesive tape (K) according to one of Claims 1 to 3, **characterized in that** the reinforcement layer (VS1) is configured from paper.

6. Adhesive tape (K) according to one of Claims 1 to 5, **characterized in that** the reinforcement layer (VS1) comprises metal.

7. Adhesive tape (K) according to Claim 6, **characterized in that** the metal is aluminium.

8. Adhesive tape (K) according to one of Claims 1 to 7, **characterized in that** the reinforcement layer (VS1) has a low flexural rigidity.

9. Adhesive tape (K) according to one of Claims 1 to 8, **characterized in that** the reinforcement layer (VS1) is configured so as to be capable of being torn by hand transversely to the longitudinal direction of the adhesive tape (K).

10. Adhesive tape (K) according to one of Claims 1 to 9, **characterized in that** the tear-off force (determined according to the method in the description) of that part (K4b) of the splitting system (K4) that remains on the second adhesive compound layer (K2) is at least 10 N/ 15 mm, preferably at least 20 N/15 mm, particularly preferably at least 30 N/15 mm, in the longitudinal direction of the adhesive tape (K).

11. Adhesive tape (K) according to one of Claims 1 to 10, **characterized in that** a further reinforcement layer (VS2) is applied between the carrier layer (K3) and the splitting system (K4).

12. Flat web material (RB) which is wound on a roll (R, B), wherein the flat web material (RB) has an adhesive tape (K) according to one of Claims 1 to 11.

13. Use of an adhesive tape (K) configured according to one of Claims 1 to 11, for a roll change on the fly.

## Revendications

1. Bande adhésive (K) destinée au changement sur rouleau à la volée de la bande de matière plate (RB) enroulée sur des rouleaux (R, B), ladite bande adhésive comprenant
une couche de support (K3) qui comporte une première surface (K31) et une deuxième surface (K32) opposée à la première surface (K31),
une première couche de matière adhésive (K1) qui est disposée indirectement ou directement, au moins en partie, sur la première surface (K31) de la couche de support (K3),
une deuxième couche de matière adhésive (K2) qui est disposée indirectement sur au moins une zone de la deuxième surface (K32) de la couche de support (K3), et au moins une surface de rupture prédéfinie destinée à la séparation bidimensionnelle de la bande adhésive (K),
la surface de rupture prédéfinie étant conçue comme partie d'un système de séparation (K4) entre la couche de support (K3) et la deuxième couche de matière adhésive (K2),
**caractérisée en ce qu'**une couche de renfort (VS1) est appliquée entre la deuxième couche de matière adhésive (K2) et le système de séparation (K4), laquelle couche de renfort augmente la résistance à la déchirure de la partie (K4b) du système de séparation (K4), qui reste sur la deuxième couche de matière adhésive (K2) après séparation, dans le sens de défilement de la bande adhésive (K).

2. Bande adhésive (K) selon la revendication 1, **caractérisée en ce que** la couche de renfort (VS1) a été appliquée dans un procédé d'extrusion.

3. Bande adhésive (K) selon la revendication 1, **caractérisée en ce que** la couche de renfort (VS1) est contrecollée.

4. Bande adhésive(K) selon l'une des revendications 1 à 3, **caractérisée en ce que** la couche de renfort (VS1) est formée d'une matière polymérique.

5. Bande adhésive (K) selon l'une des revendications 1 à 3, **caractérisée en ce que** la couche de renfort (VS1) est formée de papier.

6. Bande adhésive (K) selon l'une des revendications 1 à 5, **caractérisée en ce que** la couche de renfort (VS1) comprend du métal.

7. Bande adhésive (K) selon la revendication 6, **caractérisée en ce que** le métal est de l'aluminium.

8. Bande adhésive (K) selon l'une des revendications 1 à 7, **caractérisée en ce que** la couche de renfort (VS1) présente une faible rigidité en flexion.

9. Bande adhésive (K) selon l'une des revendications 1 à 8, **caractérisée en ce que** la couche de renfort (VS1) est destinée à être déchirée à la main transversalement à la direction longitudinale de la bande adhésive (K).

10. Bande adhésive (K) selon l'une des revendications 1 à 9, **caractérisée en ce que** la force de déchirure (déterminée selon le procédé de la description) de la partie (K4b) du système de séparation (K4), restant sur la deuxième couche adhésive (K2), est d'au moins 10 N/15 mm dans la direction longitudinale de la bande adhésive (K), de préférence d'au moins 20 N/15 mm, de manière particulièrement préférée d'au moins 30 N/15 mm.

11. Bande adhésive (K) selon l'une des revendications 1 à 10, **caractérisé en ce qu'**une autre couche de renfort (VS2) est appliquée entre la couche de support (K3) et le système de séparation (K4).

12. Bande de matière plate (RB) qui est enroulée sur un rouleau (R, B), la bande de matière plate (RB) comportant un bande adhésive (K) selon l'une des revendications 1 à 11.

13. Utilisation d'une bande adhésive (K) conçue selon l'une des revendications 1 à 11 pour un changement sur rouleau à la volée.
